# EUROPÄISCHE PATENTSCHRIFT

(11) **EP 1 077 107 B1**
(45) Veröffentlichungstag und Bekanntmachung des Hinweises auf die Patenterteilung: **27.04.2005**
(21) Anmeldenummer: 00115533.2
(22) Anmeldetag: 19.07.2000
(51) Int. Cl.: B24B 23/04, F16J 15/32, B44D 3/16, B25F 5/00

(54) **Handwerkzeugmaschine**
Portable power tool
Outil portatif motorisé

(30) Priorität: 16.08.1999 DE 19938161
(43) Veröffentlichungstag der Anmeldung: 21.02.2001
(73) Patentinhaber: ROBERT BOSCH GMBH, 70442 Stuttgart (DE)
(72) Erfinder: Stierle, Peter, 71111 Waldenbuch (DE); Renner, Monika, 70771 Leinfelden-Echterdingen (DE); Mueller, Joachim, 70597 Stuttgart (DE)

(56) Entgegenhaltungen:
- DE-A- 19 547 332
- US-A- 3 664 021
- US-A- 4 385 854
- US-A- 5 009 012
- US-A- 5 544 895
- US-A- 5 649 709
- US-A- 5 860 656

## Beschreibung

### Stand der Technik

Die Erfindung geht aus von einer Handwerkzeugmaschine nach dem Oberbegriff des Anspruchs 1.

Durch die DE 195 47 332 A1 ist eine gattungsbildende Handwerkzeugmaschine bekannt, deren zylindrisches Gehäuse aus zwei Kunststoffgehäuseschalen besteht, deren Ränder je eine Teilungskante bilden, die eine waagrechte Teilungsebene definieren. Die Gehäuseschalen sind durch Schrauben miteinander verbunden. Im inneren des Gehäuses ist ein Motor mit einem Lüfterrad angeordnet, dessen Antriebswelle über ein Kugellager in den Gehäuseschalen gelagert und mit einem kegeligen Ritzel drehfest verbunden ist. Das Ritzel kämmt mit einem von einer Abtriebswelle drehfest getragenen kegeligen Tellerrad, dessen Drehachse rechtwinklig zur Antriebswelle verläuft.

Die Abtriebswelle besitzt eine werkzeugferne Lagerstelle, die ein ringartiges Gleitlager aufweist, das in eine zylindrische Lageraufnahme einer Gehäuseschale eingesetzt ist. Ferner besitzt die Abtriebswelle eine werkzeugnahe Lagerstelle, die eine hülsenartige Lagerbuchse mit einem Nadellager aufweist.

Ein vom werkzeugnahen Ende der Abtriebswelle getragener Exzenterzapfen ragt durch die Lagerbuchse von oben in eine Bohrung eines pleuelartigen Mitnehmers. Der Mitnehmer liegt über eine Reibfläche auf einem Einsatzwerkzeug auf und greift mit einem Vorsprung in ein Langloch des Einsatzwerkzeugs, das mit seinem Schaft über ein Führungslager im vorderen Bereich der Gehäuseschalen gelagert und mit dem Schaft durch eine Öffnung einer Abschlußklappe nach außen geführt ist. Durch das Langloch erfolgt eine formschlüssige Bewegungsübertragung von der Antriebswelle über den Mitnehmer auf das Einsatzwerkzeug nur dann, wenn das Einsatzwerkzeug auf eine Arbeitsfläche aufgesetzt und soweit zurück geschoben wird, daß sich der Bolzen am Rand des Langlochs abstützen und so seine hin- und hergehende Bewegung formschlüssig auf das Einsatzwerkzeug übertragen kann.

Die Abschlußkappe wird nach der Montage der Gehäuseschalen montiert und wird dabei von vorne auf einen von den Gehäuseschalen gebildeten umlaufenden Bund aufgeschoben. Die Abschlußkappe wird elastisch aufgebogen und rastet anschließend mit einem Vorsprung hinter dem Bund ein. Die Abschlußkappe besitzt zum Einsatzwerkzeug im Bereich der Öffnung zwei angeformte, umlaufende Dichtlippen, die mit ihren Stirnseiten auf Seitenflächen des Einsatzwerkzeugs aufliegen.

### Vorteile der Erfindung

Die Erfindung geht aus von einer Handwerkzeugmaschine mit einem in einem Gehäuse angeordneten Motor, der über eine Antriebswelle mit einem Winkelgetriebe wirkungsmäßig verbunden ist, das eine gelagerte Abtriebswelle aufweist, die über einen Exzenter auf ein Mitnahmeelement wirkt. Das Mitnahmeelement ist mit einem hin- und hergehend bewegbaren Einsatzwerkzeug über eine Reibfläche verbunden, wenn keine Kraft in Bewegungsrichtung auf das Einsatzwerkzeug wirkt und ist mit dem Einsatzwerkzeug über einen Formschluß verbunden, wenn das Einsatzwerkzeug über eine Kraft gegen das Mitnahmeelement verschoben ist. Das Einsatzwerkzeug ist mit seinem Schaft in einem Führungslager gelagert und mit dem Schaft durch eine Öffnung einer Abschlußkappe nach außen geführt.

Es wird vorgeschlagen, daß im Bereich der Öffnung zumindest eine elastische Lippe angeordnet ist, die durch das Einführen des Einsatzwerkzeugs umgeklappt ist und beim Stillstand des Einsatzwerkzeugs und während hin- und hergehender Bewegung des Einsatzwerkzeugs in umgeklappter Stellung auf dem Schaft des Einsatzwerkzeugs aufliegt. Durch die umgeklappte Lippe kann Verschleiß über den Umklappwinkel kompensiert und es können über die Lebensdauer im wesentlichen gleichbleibende Reibwerte erreicht werden. Die Reibwerte in der Schutzkappe können stets größer gehalten werden als die Reibwerte im Leerlauf zwischen dem Mitnahmeelement und dem Einsatzwerkzeug. Die Reibwerte zwischen dem Mitnahmeelement und dem Einsatzwerkzeug können durch eine Rollreibung eines Wälzkörpers oder durch eine Gleitreibung bestimmt sein.

Das Einsatzwerkzeug kann im Leerlauf durch die Abschlußkappe bzw. durch die Lippe sicher bis zum Stillstand abgebremst und gehalten werden. Ungewünschte Bewegungen des Einsatzwerkzeugs im Leerlauf können vermieden werden.

Um ein Zurückklappen im hinteren Umkehrpunkt des Einsatzwerkzeugs zu vermeiden, wird vorgeschlagen, daß die Lippe an ihrem zum Einsatzwerkzeug weisenden Ende abgerundet und/oder bereits vor dem Einführen des Einsatzwerkzeugs in Einführrichtung ausgerichtet ist. Ferner kann eine abgerundete Lippe beim Herstellen vorteilhaft aus einer Gußform gelöst bzw. entformt werden.

Die Lippe kann von einem form-, kraft- und/oder stoffschlüssig an der Abschlußkappe befestigten zusätzlichen Bauteil gebildet sein. Die Abschlußkappe kann aus verschiedenen Materialien hergestellt sein, wie beispielsweise aus Aluminiumdruckguß, ist jedoch vorzugsweise aus einem Kunststoff hergestellt, wodurch an die Abschlußkappe kostengünstig Dichtlippen und eine oder mehrere erfindungsgemäße Lippen angeformt werden können. Zusätzliche Bauteile, Montageaufwand und Kosten können eingespart werden. Möglich ist auch, daß zumindest eine erfindungsgemäße Lippe die Funktion einer Dichtlippe übernimmt, wodurch zumindest eine Dichtlippe wenigstens teilweise eingespart werden kann.

In einer Ausgestaltung der Erfindung wird vorgeschlagen, daß die Öffnung in der Abschlußkappe von angeformten, auf dem Einsatzwerkzeug aufliegenden Dichtlippen begrenzt ist und einen eckigen Querschnitt mit an den Ecken eingebrachten Ausnehmungen aufweist. Durch die Ausnehmungen können Verspannungen an den Ecken vermieden und es kann ein Einreißen verhindert werden. Ferner werden die Dichtlippen vorteilhaft dazu genutzt, eine zusätzliche Bremswirkung auf das Einsatzwerkzeug im Leerlauf zu erzeugen.

Ferner wird vorgeschlagen, daß die Abschlußkappe zwischen zwei Gehäuseteilen eingelegt ist, die formschlüssig in die Abschlußkappe eingreifen, und zwar vorteilhaft zwischen zwei umlaufende Wülste der Abschlußkappe. Die Abschlußkappe kann dadurch besonders einfach montierbar und besonders abreißsicher ausgeführt werden.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: einen Längsschnitt durch eine erfindungsgemäße Handwerkzeugmaschine,
- Fig. 2: eine geöffnete Handwerkzeugmaschine nach Fig. 1 von unten,
- Fig. 3: einen vergrößerten Ausschnitt III aus Fig. 1 mit einem montierten Einsatzwerkzeug,
- Fig. 4: ein Führungslager schräg von oben,
- Fig. 5: eine vergrößerte Darstellung einer Abschlußkappe im Schnitt vor dem Einführen eines Einsatzwerkzeugs,
- Fig. 6: eine vergrößerte Darstellung einer Abschlußkappe im Schnitt nach dem Einführen eines Einsatzwerkzeugs und
- Fig. 7: die Abschlußkappe aus Fig. 5 in der in Fig. 5 mit VII gekennzeichneten Richtung.

### Beschreibung des Ausführungsbeispiels

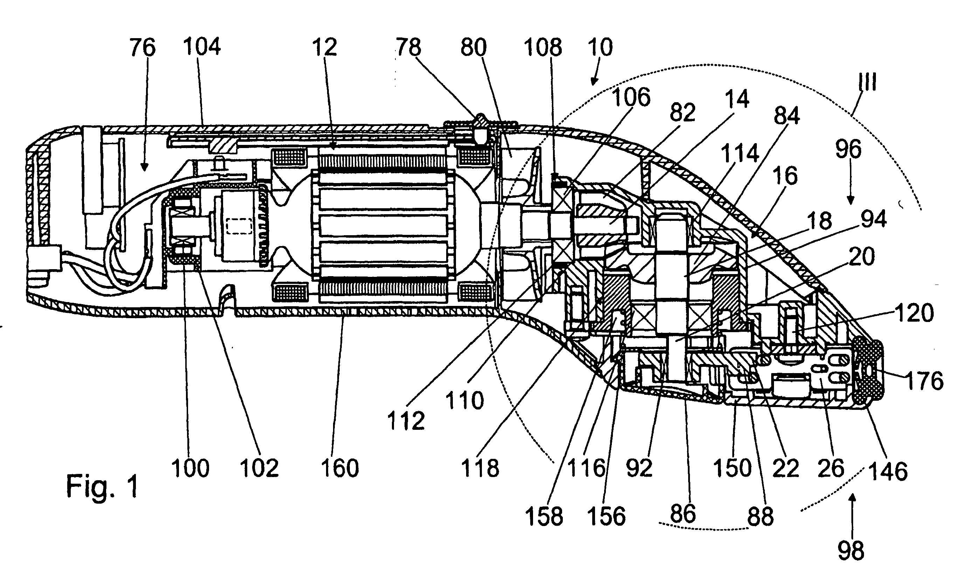

Fig. 1 zeigt einen Längsschnitt durch eine Handwerkzeugmaschine zur schabenden Bearbeitung von Oberflächen, kurz als Schaber bezeichnet. Die Handwerkzeugmaschine besitzt einen in einem Gehäuse 10 angeordneten Motor 12, der über Elektrokabel 76 elektrisch versorgt und über einen Schalter 78 ein- und ausschaltbar ist. Der Elektromotor 12 ist über eine Antriebswelle 14 mit einem Lüfterrad 80 und mit einem Winkelgetriebe 16 wirkungsmäßig verbunden, und zwar ist auf der Antriebswelle 14 ein Ritzel 82 befestigt, das mit einem von einer Abtriebswelle 18 getragenen Tellerrad 84 kämmt, dessen Drehachse rechtwinklig zur Antriebswelle 14 verläuft. Am nach unten weisenden Ende der Abtriebswelle 18 ist ein Exzenterzapfen 20 angeformt, der in ein pleuelartiges Mitnahmeelement 22 greift.

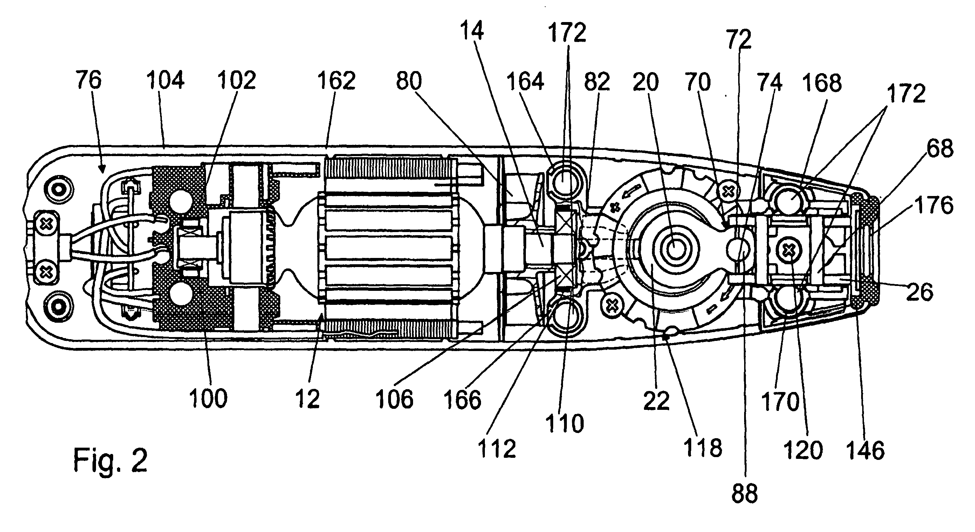

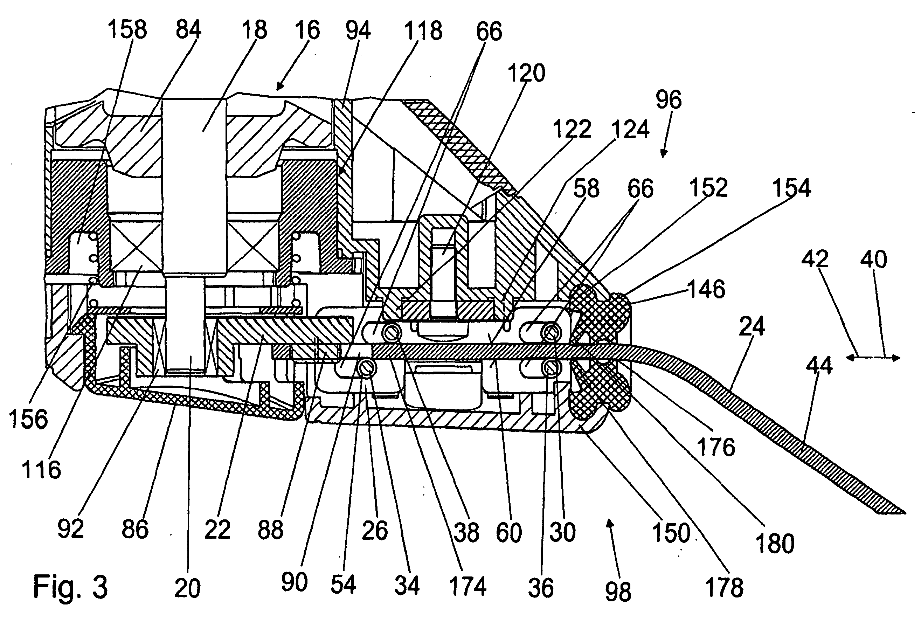

Das Mitnahmeelement 22 stützt sich über eine von angeformten Auflagerippen 72, 74 gebildete Auflagefläche bzw. Gleitfläche 70 auf einem Schaft 174 eines Einsatzwerkzeugs 24 ab und greift mit einem angeformten Bolzen 88 in ein Langloch 90 des Einsatzwerkzeugs 24 (Fig. 2 und 3). Anstatt über eine Gleitfläche 70 könnte ein Mitnahmeelement auch über einen Wälzkörper auf dem Einsatzwerkzeug 24 abgestützt sein. Der Exzenterzapfen 20 ist über ein Wälzlager 92 im Mitnahmeelement 22 gelagert. Durch das Langloch 90 erfolgt die Bewegungsübertragung von der Antriebswelle 14 über das Mitnahmeelement 22 auf das Einsatzwerkzeug 24 nur dann formschlüssig, wenn das Einsatzwerkzeug 24 auf eine Arbeitsfläche aufgesetzt und soweit zurück geschoben wird, daß sich der Bolzen 88 am Rand des Langlochs 90 abstützen und so seine hin- und hergehende Bewegung auf das Einsatzwerkzeug 24 formschlüssig übertragen kann. Im Leerlauf steht das Einsatzwerkzeug 24 bei drehender Antriebswelle 14 still, so daß der Verschleiß an den bewegungsübertragenden Teilen verringert wird. Verletzungen im Leerlauf durch ein sich bewegendes Einsatzwerkzeug 24 werden vermieden. Ferner kann das ruhende Einsatzwerkzeug 24 im Leerlauf gezielt an einer gewünschten Stelle auf der zu bearbeitenden Oberfläche aufgesetzt werden.

Das Winkelgetriebe 16 ist in einem separaten Getriebegehäuse 94 aus Aluminiumdruckguß angeordnet, das im vorderen, oberen Bereich 96 einen ersten Teil und mit einem Deckel 150 im vorderen, unteren Bereich 98 einen zweiten Teil des Gehäuses 10 bzw. Außenwände der Handwerkzeugmaschine bildet.

Im Getriebegehäuse 94 sind mehrere Lagerstellen integriert. Die Antriebswelle 14 des Elektromotors 12 ist an einem ersten, dem Einsatzwerkzeug 24 abgewandten Ende über ein Lager 100 und über ein Bauteil 102 in einer ersten oberen Kunststoffgehäuseschale 104 gelagert. Ein zweites, dem Einsatzwerkzeug 24 zugewandtes Ende der Antriebswelle 14 ist über ein Lager 106 in einer topfförmigen Ausnehmung 108 im Getriebegehäuse 94 gelagert. Das Lager 106 ist in radialer Richtung ca. über 1/3 seiner Länge über einen Schiebesitz 110 direkt im Getriebegehäuse 94 und über ca. 2/3 seiner Länge in radialer Richtung über einen Gummiring 112 im Getriebegehäuse 94 abgestützt. In axialer Richtung ist das Lager 106 über eine nicht näher dargestellte Halterippe in der topfförmigen Ausnehmung 108 fixiert, die an einen Schraubendom der oberen Gehäuseschale 104 angeformt ist und sich bei der Montage vor die topfförmige Ausnehmung 108 schiebt.

Ferner ist die Abtriebswelle 18 an ihrem oberen, dem Einsatzwerkzeug 24 abgewandten Ende mit einem ersten Lager 114 direkt und an ihrem zweiten, dem Einsatzwerkzeug 24 zugewandten Ende mit einem zweiten Lager 116 über eine als Stellmittel 118 ausgebildete Lagerbuchse im Getriebegehäuse 94 gelagert.

Zum Auswechseln des Einsatzwerkzeugs 24 kann das Mitnahmeelement 22 über die Drucktaste 86 entlang des Exzenterzapfens 20 entgegen einer Druckfeder 156 verschoben werden, die sich in einer Einbuchtung 158 am Stellmittel 118 abstützt. Der Bolzen 88 verschiebt sich aus dem Langloch 90 des Einsatzwerkzeugs 24, wodurch dieses ohne Werkzeuge entfernt und ein alternatives Einsatzwerkzeug eingesetzt werden kann.

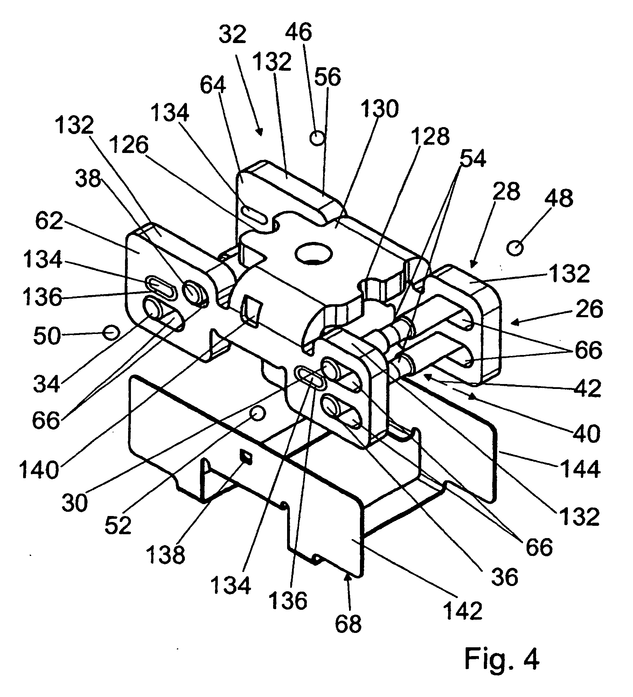

Am Getriebegehäuse 94 ist zudem ein Führungslager 26 mit einem U-förmigen Käfig 56 für das Einsatzwerkzeug 24 befestigt, und zwar über eine Schraube 120 und über an das Getriebegehäuse 94 angeformte Zapfen 122, 124, die in Ausnehmungen 126, 128 einer Deckseite 130 des U-förmigen Käfigs 56 formschlüssig greifen (Fig. 3 und 4). Das in einem Stanz-Biegeverfahren aus einem gehärteten Stahlblech hergestellte Führungslager 26 stützt sich mit Stirnseiten 132 seiner Schenkel 62, 64 am Getriebegehäuse 94 ab. Das Führungslager 26 ist sicher form- und kraftschlüssig mit dem Getriebegehäuse 94 verbunden und eine Nachbearbeitung der Lagerflächen bzw. Stirnseiten 132 des Führungslagers 26 nach dem Stanz-Biegeverfahren kann vermieden werden. Zwischen den Schenkeln 62, 64 des U-förmigen Käfigs 56 ist zudem das Mitnahmeelement 22 verdrehsicher geführt (Fig. 2).

Das Führungslager 26 besitzt im vorderen, oberen Bereich 28, in einer ersten Lagerachse oberhalb dem Einsatzwerkzeug 24 einen ersten Wälzkörper 30 und in einem hinteren Bereich 32, in einer zweiten Lagerachse unterhalb dem Einsatzwerkzeug 24 einen zweiten Wälzkörper 34. Ferner besitzt das Führungslager in einer dritten Lagerachse einen dritten Wälzkörper 36, der vor dem zweiten Wälzkörper 34, unterhalb dem Einsatzwerkzeug 24 angeordnet ist und in einer vierten Lagerachse einen vierten Wälzkörper 38, der hinter dem dritten Wälzkörper 36, oberhalb dem Einsatzwerkzeug 24 angeordnet ist. Das Einsatzwerkzeug 24 ist auf seiner Oberseite 58 und auf seiner Unterseite 60 über jeweils zwei Wälzkörper 30, 34, 36, 38 abstützbar, die als Nadeln ausgebildet und in Langlöchern 66 in den Schenkeln 62, 64 des U-förmigen Käfigs 56 geführt sind.

In die Konturen der Wälzkörper 30, 34, 36, 38 sind Kodierungen 54 eingebracht, und zwar jeweils in der Form eines Einstichs. Einsatzwerkzeuge mit entsprechenden Erhöhungen oder auch ohne Erhöhungen können in das Führungslager 26 eingeschoben werden. Einsatzwerkzeuge mit einer Erhöhung können jedoch nicht in unkodierte Führungslager eingeschoben werden, und zwar insbesondere nicht in ein unkodiertes Führungslager einer leistungsschwächeren Ausführungsform der Handwerkzeugmaschine.

Ferner sind im Führungslager 26 gegenüber jeder Seitenfläche 44 des Einsatzwerkzeugs 24 jeweils zwei Wälzkörper 46, 48, 50, 52 in zwei Lagerachsen angeordnet, über die das Einsatzwerkzeug 24 senkrecht zu seiner Bewegungsrichtung 40, 42 über seine Seitenflächen 44 abstützbar ist (Fig. 3 und 4). Das Einsatzwerkzeug 24 ist im Führungslager 26 vollständig über die Wälzkörper 30, 34, 36, 38, 46, 48, 50, 52 abstützbar. Eine Gleitreibung zwischen dem Führungslager 26 und dem Einsatzwerkzeug 24 wird vermieden.

Die als Kugeln ausgebildeten Wälzkörper 46, 48, 50, 52 sind in konischen Langlöchern 134 geführt. Bereits vor der Montage des Führungslagers 26 im Gehäuse 10 bzw. am Getriebegehäuse 94 sind die Kugeln zur Innenseite über die Konuse 136 und zur Außenseite über ein Halteblech 68 verliersicher im Käfig 56 gehalten. Im montierten Zustand des Führungslagers 26 am Getriebegehäuse 94 sind die Kugeln zur Außenseite zusätzlich durch nicht näher dargestellte Seitenwände des Getriebegehäuses 94 gesichert, die auf Seitenflächen 142, 144 des Halteblechs 68 aufliegen. Das Halteblech 68 wird über jeweils einen Vorsprung 138 auf jeder Seite in Ausnehmungen 140 am Käfig 56 eingerastet und sichert neben den Kugeln die als Nadeln ausgebildeten Wälzkörper 30, 34, 36, 38 verliersicher im Käfig 56 bereits vor der Montage am Getriebegehäuse 94.

Im vorderen Bereich der Handwerkzeugmaschine ist das Einsatzwerkzeug 24 mit seinem Schaft 174 durch eine Öffnung 176 einer Gummiabschlußkappe 146 geführt. Die Abschlußkappe 146 ist zwischen dem Getriebegehäuse 94 und dem Deckel 150 formschlüssig eingelegt, und zwar greifen das Getriebegehäuse 94 und der Deckel 150 zwischen zwei umlaufende Wülste 152, 154 der Abschlußkappe 146. Die Abschlußkappe 146 ist dadurch besonders einfach zu montieren und besonders abreißsicher mit der Handwerkzeugmaschine verbunden. Ferner ist die Abschlußkappe 146 durch den Deckel 150 und durch das Getriebegehäuse 94 vor Verschleiß bzw. vor Abrieb auf der zu bearbeitenden Oberfläche geschützt.

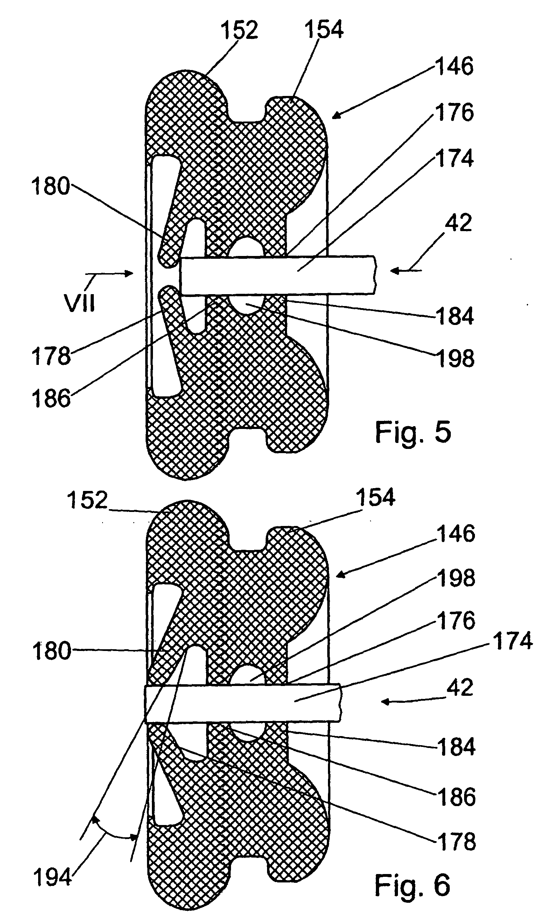

Erfindungsgemäß sind im Bereich der Öffnung 176 zwei elastische Lippen 178, 180 angeformt, die durch das Einführen des Einsatzwerkzeugs 24 in Einführrichtung 42 umgeklappt sind und in umgeklappter Stellung auf der Oberseite 58 und auf der Unterseite 60 des Schafts 174 des Einsatzwerkzeugs 24 aufliegen, und zwar beim Stillstand des Einsatzwerkzeugs 24 und während der hin- und hergehenden Bewegung des Einsatzwerkzeugs 24 (Fig. 3, 5 und 6). Die Lippen 178, 180 sind an ihrem zum Einsatzwerkzeug 24 weisenden Ende abgerundet und sind bereits vor dem Einführen des Einsatzwerkzeugs 24 in Einführrichtung 42 ausgerichtet. Tritt an den Lippen 178, 180 Verschleiß auf, kann dieser durch einen sich verkleinernden Umklappwinkel 194 kompensiert werden (Fig. 6). Über die Lebensdauer können im wesentlichen gleichbleibende Reibwerte erreicht werden. Das Einsatzwerkzeug 24 kann im Leerlauf durch die Lippen 178, 180 stets sicher bis zum Stillstand abgebremst und im Stillstand gehalten werden.

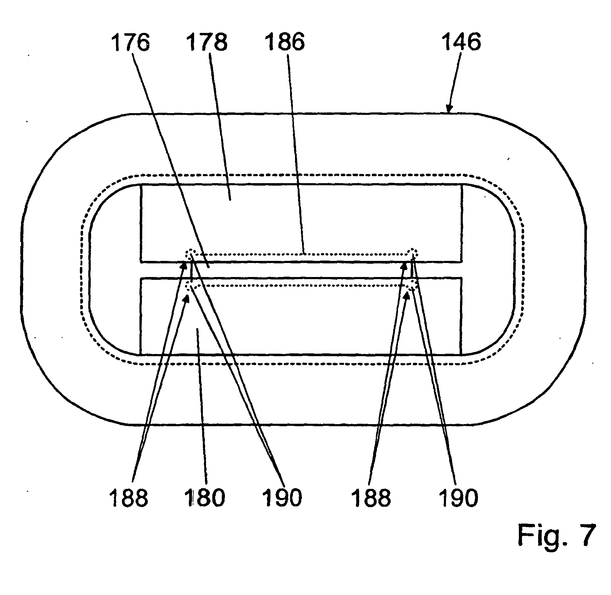

Die Öffnung 176 der Abschlußkappe 146 ist von angeformten Dichtlippen 184, 186 begrenzt und besitzt einen rechteckigen Querschnitt mit an den Ecken 188 eingebrachten Ausnehmungen 190, wodurch ein Einreißen an den Ecken 188 vermieden werden kann (Fig. 7). Zwischen den Dichtlippen 184, 186 ist ein Fettdepot 198 angeordnet.

Das Gehäuse 10 besitzt neben der ersten oberen Gehäuseschale 104 eine zweite untere Kunststoffgehäuseschale 160, die in einer waagerechten Arbeitsstellung in einer waagerechten Teilungsebene 162 zusammengefügt sind (Fig. 2). An das Getriebegehäuse 94 sind vier Hülsen 164, 166, 168, 170 angeformt, in die von oben vier Zapfen 172 der oberen Gehäuseschale 104 kraft- und formschlüssig eingesteckt sind. Ferner werden von unten in die zwei vom Einsatzwerkzeug 24 abgewandten Hülsen 164, 166 zwei nicht näher dargestellte Zapfen von der unteren Gehäuseschale 160 und in die zwei, dem Einsatzwerkzeug 24 zugewandten Hülsen 168, 170 zwei Zapfen des Deckels 150 form- und kraftschlüssig eingesteckt. Die Zapfen 172 der Gehäuseschalen 104, 160 und die Zapfen des Deckels 150 werden von Schraubendomen gebildet, über die die Gehäuseschalen 104, 160, der Deckel 150 und das Getriebegehäuse 94 über nicht näher dargestellte Schrauben miteinander verschraubt sind.

### Bezugszeichen

- 10: Gehäuse
- 12: Motor
- 14: Antriebswelle
- 16: Winkelgetriebe
- 18: Abtriebswelle
- 20: Exzenter
- 22: Mitnahmeelement
- 24: Einsatzwerkzeug
- 26: Führungslager
- 28: Bereich
- 30: Wälzkörper
- 32: Bereich
- 34: Wälzkörper
- 36: Wälzkörper
- 38: Wälzkörper
- 40: Bewegungsrichtung
- 42: Bewegungsrichtung
- 44: Seitenfläche
- 46: Wälzkörper
- 48: Wälzkörper
- 50: Wälzkörper
- 52: Wälzkörper
- 54: Kodierung
- 56: Käfig
- 58: Oberseite
- 60: Unterseite
- 62: Schenkel
- 64: Schenkel
- 66: Langloch
- 68: Bauteil
- 70: Auflagefläche
- 72: Auflagerippen
- 74: Auflagerippen
- 76: Elektrokabel
- 78: Schalter
- 80: Lüfterrad
- 82: Ritzel
- 84: Tellerrad
- 86: Drucktaste
- 88: Bolzen
- 90: Langloch
- 92: Wälzlager
- 94: Getriebegehäuse
- 96: Bereich
- 98: Bereich
- 100: Lager
- 102: Bauteil
- 104: Gehäuseschale
- 106: Lager
- 108: Ausnehmung
- 110: Schiebesitz
- 112: Gummiring
- 114: Lager
- 116: Lager
- 118: Stellmittel
- 120: Schraube
- 122: Zapfen
- 124: Zapfen
- 126: Ausnehmung
- 128: Ausnehmung
- 130: Deckseite
- 132: Stirnseite
- 134: Langloch
- 136: Konus
- 138: Vorsprung
- 140: Ausnehmung
- 142: Seitenfläche
- 144: Seitenfläche
- 146: Abschlußkappe
- 150: Deckel
- 152: Wulst
- 154: Wulst
- 156: Druckfeder
- 158: Einbuchtung
- 160: Gehäuseschale
- 162: Teilungsebene
- 164: Hülse
- 166: Hülse
- 168: Hülse
- 170: Hülse
- 172: Zapfen
- 174: Schaft
- 176: Öffnung
- 178: Lippe
- 180: Lippe
- 184: Dichtlippe
- 186: Dichtlippe
- 188: Ecke
- 190: Ausnehmung
- 194: Umklappwinkel
- 198: Fettdepot

## Patentansprüche

1. Handwerkzeugmaschine mit einem in einem Gehäuse (10) angeordneten Motor (12), der über eine Antriebswelle (14) mit einem Winkelgetriebe (16) wirkungsmäßig verbunden ist, das eine gelagerte Abtriebswelle (18) aufweist, die über einen Exzenter (20) auf ein Mitnahmeelement (22) wirkt, das mit einem hin- und hergehend bewegbaren Einsatzwerkzeug (24) über eine Reibfläche (70) verbunden ist, wenn keine Kraft in Bewegungsrichtung (42) auf das Einsatzwerkzeug (24) wirkt und mit dem Einsatzwerkzeug (24) über einen Formschluß verbunden ist, wenn das Einsatzwerkzeug (24) über eine Kraft gegen das Mitnahmeelement (22) verschoben ist, wobei das Einsatzwerkzeug (24) mit seinem Schaft (174) in einem Führungslager (26) gelagert und mit dem Schaft (174) durch eine Öffnung (176) einer Abschlußkappe (146) nach außen geführt ist, **dadurch gekennzeichnet, daß** im Bereich der Öffnung (176) zumindest eine elastische Lippe (178, 180) angeordnet ist, die durch das Einführen des Einsatzwerkzeugs (24) umgeklappt ist und beim Stillstand des Einsatzwerkzeugs (24) und während hin- und hergehender Bewegung des Einsatzwerkzeugs (24) in umgeklappter Stellung auf dem Schaft (174) des Einsatzwerkzeugs (24) aufliegt.

2. Handwerkzeugmaschine nach Anspruch 1, **dadurch gekennzeichnet, daß** die Lippe (178, 180) an ihrem zum Einsatzwerkzeug (24) weisenden Ende abgerundet ist.

3. Handwerkzeugmaschine nach Anspruch 1 oder 2, **dadurch gekennzeichnet, daß** die Lippe (178, 180) bereits vor dem Einführen des Einsatzwerkzeugs (24) in Einführrichtung (42) ausgerichtet ist.

4. Handwerkzeugmaschine nach einem der vorhergehenden Ansprüche, **dadurch gekennzeichnet, daß** die Abschlußkappe (146) aus Kunststoff ist und die Lippe (178, 180) an die Abschußkappe (146) angeformt ist.

5. Handwerkzeugmaschine nach Anspruch 4, **dadurch gekennzeichnet, daß** die Öffnung (176) der Abschlußkappe (146) von angeformten, auf dem Einsatzwerkzeug (24) aufliegenden Dichtlippen (184, 186) begrenzt ist und einen eckigen Querschnitt mit an den Ecken (188) eingebrachten Ausnehmungen (190) aufweist.

6. Handwerkzeugmaschine nach einem der vorhergehenden Ansprüche, **dadurch gekennzeichnet, daß** die Abschlußkappe (146) zwischen zwei Gehäuseteilen (94, 150) eingelegt ist, die formschlüssig in die Abschlußkappe (146) eingreifen.

7. Handwerkzeugmaschine nach Anspruch 6, **dadurch gekennzeichnet, daß** die Gehäuseteile (94, 150) zwischen zwei umlaufende Wülste (152, 154) der Abschlußkappe (94, 150) eingreifen.

## Claims

1. Powered hand tool having a motor (12) which is arranged in a housing (10) and is operatively connected via a drive shaft (14) to angular gearing (16) which has a mounted output shaft (18) which acts via an eccentric (20) on a driving element (22) which is connected to an insert tool (24), movable in a reciprocating manner, via a friction surface (70) when no force acts on the insert tool (24) in the direction of movement (42) and is connected to the insert tool (24) in a positive-locking manner when the insert tool (24) is displaced against the driving element (22) via a force, the insert tool (24), with its shank (174), being mounted in a guide bearing (26) and being led outwards with the shank (174) through an opening (176) of an end cap (146), **characterized in that** at least one elastic lip (178, 180) is arranged in the region of the opening (176), this elastic lip (178, 180) being folded back by the insertion of the insert tool (24) and resting in the folded-back position on the shank (174) of the insert tool (24) during reciprocating movement of the insert tool (24) and when the insert tool (24) is stationary.

2. Powered hand tool according to Claim 1, **characterized in that** the lip (178, 180) is rounded off at its end pointing towards the insert tool (24).

3. Powered hand tool according to Claim 1 or 2, **characterized in that** the lip (178, 180) is already oriented in the insertion direction (42) before the insertion of the insert tool (24).

4. Powered hand tool according to one of the preceding claims, **characterized in that** the end cap (146) is made of plastic and the lip (178, 180) is integrally formed on the end cap (146).

5. Powered hand tool according to Claim 4, **characterized in that** the opening (176) of the end cap (146) is defined by integrally formed sealing lips (184, 186) resting on the insert tool (24) and has a cornered cross section with recesses (190) incorporated at the corners (188).

6. Powered hand tool according to one of the preceding claims, **characterized in that** the end cap (146) is inserted between two housing parts (94, 150) which engage in the end cap (146) in a positive-locking manner.

7. Powered hand tool according to Claim 6, **characterized in that** the housing parts (94, 150) engage between two encircling beads (152, 154) of the end cap (94, 150).

## Revendications

1. Outil portatif motorisé avec un moteur (12) disposé dans un boîtier (10), relié activement par l'intermédiaire d'un arbre d'entraînement (14) à un engrenage d'angle (16), présentant un arbre de sortie monté sur palier (18) qui agit par l'intermédiaire d'un excentrique (20) sur un élément d'entraînement (22) relié à un outil à insérer (24) à mouvement alternatif par l'intermédiaire d'une surface de friction (70) lorsqu'aucune force n'agit sur l'outil à insérer (24) dans la direction du mouvement, et qui est relié à l'outil à insérer (24) par l'intermédiaire d'un assemblage géométrique lorsque l'outil à insérer (24) est déplacé par une force contre l'élément d'entraînement (22), l'outil à insérer (24) étant monté avec sa tige (174) dans un palier de guidage (26) et étant guidé vers l'extérieur avec la tige (174) à travers une ouverture (176) d'un capuchon (146),
**caractérisé en ce que**
dans la région de l'ouverture (176), est disposée au moins une lèvre élastique (178, 180) soulevée lors de l'insertion de l'outil à insérer (24) et qui s'applique en position soulevée sur la tige (174) de l'outil à insérer (24) lors de l'arrêt de ce dernier.

2. Outil portatif motorisé selon la revendication 1,
**caractérisé en ce que**
la lèvre (178, 180) est arrondie à son extrémité dirigée vers l'outil à insérer (24).

3. Outil portatif motorisé selon la revendication 1 ou 2,
**caractérisé en ce que**
la lèvre (178, 180) est déjà orientée dans la direction d'insertion (42) avant l'insertion de l'outil à insérer (24).

4. Outil portatif motorisé selon l'une quelconque des revendications précédentes,
**caractérisé en ce que**
le capuchon (146) est en matière plastique et la lèvre (178, 180) est formée sur le capuchon (146).

5. Outil portatif motorisé selon la revendication 4,
**caractérisé en ce que**
l'ouverture (176) du capuchon (146) est limitée par des lèvres d'étanchéité moulées (184, 186) s'appliquant sur l'outil à insérer (24) et présente une section transversale polygonale avec des évidements (190) pratiqués dans les angles (188).

6. Outil portatif motorisé selon l'une quelconque des revendications précédentes,
**caractérisé en ce que**
le capuchon (146) est placé entre deux parties du boîtier (94, 150), qui s'engagent par emboîtement dans le capuchon (146).

7. Outil portatif motorisé selon la revendication 6,
**caractérisé en ce que**
les parties du boîtier (94, 150) s'engagent entre deux bourrelets périphériques (152, 154) du capuchon (146).
